# EUROPÄISCHE PATENTANMELDUNG

(11) **EP 0 601 475 A1**
(43) Veröffentlichungstag der Anmeldung: **15.06.1994**
(21) Anmeldenummer: 93119411.2
(22) Anmeldetag: 02.12.1993
(51) Int. Cl.: G01P 5/00, G01F 1/66

(54) **Durchflussmessvorrichtung**

(30) Priorität: 08.12.1992 DE 4241226
(71) Anmelder: ABB PATENT GmbH, D-68309 Mannheim (DE)
(72) Erfinder: Milanovic, Raiko, D-69115 Heidelberg (DE); Baier, Gunar, Dr., D-68219 Mannheim (DE); Kjellin, Tord, S-11529 Stockholm (SE); Strömberg, Per-Ake, S-18160 Lidingö (SE)
(74) Vertreter: Rupprecht, Klaus, Dipl.-Ing.

(57) **Zusammenfassung**

Die Erfindung bezieht sich auf eine Durchflußmeßvorrichtung, mit der unter Verwendung von akustischen Signalen die Strömungsgeschwindigkeit eines Medium (8) in einer Rohrleitung (10) erfaßt wird. Erfindungsgemäß ist ein Schwingkreis (2) vorgesehen, der einen Ultraschallsender (4) und einen Ultraschallempfänger (5) aufweist, die über eine akustische Übertragungsstrecke (7) miteinander gekoppelt sind, welche durch das strömende Medium (8) gebildet wird.

## Beschreibung

Die Erfindung bezieht sich auf eine Durchflußmeßvorrichtung gemäß dem Oberbegriff des Patentanspruches 1.

Ein solche Vorrichtung kommt vorzugsweise dort zum Einsatz, wo die Durchflußgeschwindigkeit eines strömenden Mediums, insbesondere einer Flüssigkeit, in einer Rohrleitung ermittelt werden soll. Schwierigkeiten bei der Geschwindigkeitsmessung treten dann auf, wenn die Strömungsgeschwindigkeit des Mediums in einer Rohrleitung gering ist. Aus der DE-A-39 41 546 ist eine Vorrichtung bekannt, bei der zur Erfassung geringer Strömungsgeschwindigkeiten eine Querschnittsverengung in der Rohrleitung vorgenommen wird. Diese Einschnürung bewirkt eine höhere Strömungsgeschwindigkeit. Allerdings wird auch ein Druckanstieg vor der Verengung erzeugt, der durch eine zusätzliche Pumpleistung ausgeglichen werden muß. Aus der DE-A-37 34 635 ist eine Vorrichtung bekannt, bei der das strömende Medium zur Ermittlung der Strömungsgeschwindigkeit umgelenkt wird, um mit achsparalleler Signaleinkopplung die volle Schalleistung zu erhalten. Bei den bekannten Vorrichtungen bleiben neben den erwähnten Nachteilen auch die Faktoren wie Temperaturänderungen und unterschiedliche Zusammensetzungen des strömenden Medium bei der Messung unberücksichtigt.

Der Erfindung liegt die Aufgabe zugrunde, eine Meßvorrichtung aufzuzeigen, mit der auch geringe Durchflußgeschwindigkeiten von strömenden Medien erfaßt und Faktoren, welche die Geschwindigkeitsmessung verfälschen, ausgeschaltet werden können.

Diese Aufgabe wird erfindungsgemäß durch die Merkmale des Patentanspruches 1 gelöst.

Zur Erfassung der Durchflußgeschwindigkeit eines strömenden Mediums ist wenigstens ein Schwingkreis vorgesehen, der einen Sender und einen Empfänger für ein akustisches Signal aufweist. Sender und Empfänger sind über eine akustische Übertragungsstrecke, in diesem Fall das strömende Medium, miteinander gekoppelt. Um negative Faktoren, welche die Geschwindigkeitsmessung nachteilig beinflussen, ausschalten zu können, ist ein Zusatzschwingkreis vorgesehen, der ebenfalls einen Sender und Empfänger für ein akustisches Signal aufweist. In einer weiteren Ausführungsform ist ein gemeinsamer Sender für beide Schwingkreise vorgesehen. Die Sender und Empfänger der Schwingkreise sind als Ultraschallsender bzw. Ultraschallempfänger ausgebildet, deren Signalweg senkrecht zur Strömung verläuft. Zusätzlich ist ein Verstärker vorgesehen, dessen Übertragungscharakteristik eine genügend große Bandbreite aufweist, um die Variationen der Resonanzfrequenz des Schwingkreises abzudecken. Die akustische Übertragungsstrecke wirkt als Verzögerungsleitung in den Schwingkreisen. Eine optimale Übertragung einer Ultraschallwelle aus dem strömenden Medium in den ersten Schwingkreis erfolgt dann, wenn die Phasenbeziehungen im Schwingkreis die Resonanzbedingungen erfüllen. Die Resonanzbedingung ist erfüllt, wenn die Phase der verstärkten Welle mit der Phase der empfangenen Welle übereinstimmt. Die akustischen Übertragungsstrecken sind so angeordnet, daß im ersten Schwingkreis die Schallwelle in Bewegungsrichtung des Mediums, im zweiten Schwingkreis senkrecht zur Bewegungsrichtung des Mediums abgestrahlt wird. Die Phase im Resonanzkreis des ersten Schwingkreises ist daher von der Signallaufzeit in der akustischen Übertragungsstrecke abhängig und ändert sich mit der Strömungsgeschwindigkeit. Die Phase des zweiten Schwingkreises ist unabhängig von der Strömungsgeschwindigkeit. Mit Hilfe des Verstärkers und der Rückkopplung des Signals in den Schwingkreis wird eine Frequenzselektion durchgeführt. Der Schwingkreis stellt sich auf seine Resonanzfrequenz ein. Da die Signalgeschwindigkeit in der elektrischen Signalleitung um ein Vielfaches größer ist, als die Schallgeschwindigkeit in dem Medium, ist die Phase von der Schallgeschwindigkeit und der Strömungsgeschwindigkeit des Mediums abhängig. Die Messung der Resonanzfrequenz erlaubt damit eine empfindliche Detektion der Strömungsgeschwindigkeit. Negative Faktoren wie die Temperatur oder die unterschiedliche Zusammensetzungen des Medium, welche das Meßsignal verfälschen, können mit Hilfe des Zusatzschwingkreises ausgeschlossen werden. Das über die akustische Übertragungsstrecke des Zusatzschwingkreises gesendete Signal ist von der Strömungsgeschwindigkeit unabhängig. Es wird jedoch von den anderen obengenannten Störfaktoren ebenso beeinflußt. Durch Auskopplung eines Teils der elektrischen Signale und einen anschließenden Frequenzvergleich können die beeinflussenden Faktoren ausgeschaltet werden.

Weitere erfindungswesentliche Merkmale sind in den Unteransprüchen gekennzeichnet.

Die Erfindung wird nachfolgend anhand schematischer Zeichnungen näher erläutert.
Es zeigen:
- Fig. 1: eine Durchflußmeßvorrichtung,
- Fig. 2: eine Durchflußmeßvorrichtung mit einem Zusatzschwingkreis.

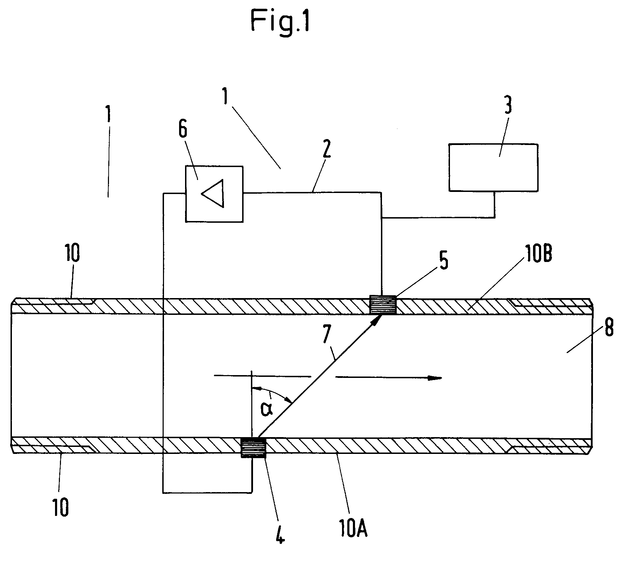

Die in Figur 1 dargestellte Durchflußmeßvorrichtung 1 umfaßt einen Schwingkreis 2 und eine Auswerteeinheit 3. In den Schwingkreis ist ein Ultraschallsender 4 und ein Ultraschallempfänger 5 integriert. Ferner weist der Schwingkreis 2 einen Verstärker 6 auf. Der Ultraschallsender 4 ist mit dem Signalausgang des Verstärkers 6 verbunden, während der Ultraschallempfänger 5 mit seinem Signalausgang an den Signaleingang des Verstärkers 6 angeschlossen ist. Der Ultraschallsender 4 ist in die Wand 10A einer Rohrleitung 10 integriert. Der Ultraschallempfänger 5 ist auf der gegenüberliegenden Seite in die Wand 10B der Rohrleitung 10 integriert. Der Ultraschallempfänger 5 ist gegenüber dem Ultraschallsender 4 um einen definierten Winkel α in Strömungsrichtung des Mediums gesehen versetzt angeordnet. Der Ultraschallsender 4 und der Ultraschallempfänger 5 sind über die akustische Übertragungsstrecke 7, welches das strömende Medium 8 bildet, miteinander gekoppelt. Die Messung der Resonanzfrequenz des Schwingkreises 2 erlaubt eine Detektion der Strömungsgeschwindigkeit des Mediums 8, die mit Hilfe der Auswerteeinheit 3 ermittelt wird.

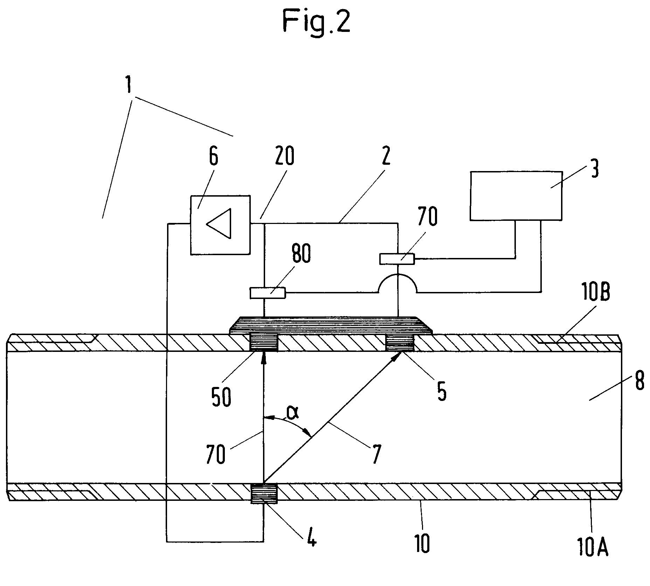

Figur 2 zeigt eine weitere Ausführungsform der erfindungsgemäßen Durchflußmeßvorrichtung 1, mit deren Hilfe Faktoren, welche die Geschwindigkeitsmessung verfälschen, ausgeschaltet werden. Die Durchflußmeßvorrichtung 1 weist einen Schwingkreis 2 und einen Zusatzschwingkreis 20 auf. In beide Schwingkreise ist je ein Ultraschallempfänger 5 bzw. 50 integriert. Beide Schwingkreise 2 und 20 weisen einen gemeinsamen Ultraschallsender 4 auf. Der Ultraschallsender 4 ist in die Begrenzungswand 10A einer Rohrleitung 10 integriert, durch welches ein strömendes Medium 8 geleitet wird. In die gegenüberliegende Begrenzungswand 10B der Rohrleitung 10 sind die beiden Ultraschallempfänger 5 und 50 integriert. Der Ultraschallempfänger 5 des Schwingkreises 2 ist gegenüber dem Ultraschallsender 4 um einen definierten Winkel α in Strömungsrichtung des Medium 8 gesehen versetzt angeordnet. Der Ultraschallempfänger 50 ist unmittelbar gegenüber dem Ultraschallsender 4 angeordnet. Das von dem Ultraschallsender 4 ausgesendete Ultraschallsignal, das von dem Ultraschallempfänger 5 empfangen wird, wird bezüglich seiner Phase von der Strömungsgeschwindigkeit des Mediums 8 beeinflußt. Das von dem Ultraschallempfänger 50 empfangene Ultraschallsignal bleibt von der Strömungsgeschwindigkeit unbeeinflußt. Ein Teil der empfangenen Signale werden mit Hilfe der Schaltelemente 70 und 80 ausgekoppelt. Die das Meßsignal verfälschenden Faktoren beeinflussen beide Signale in gleichem Maß. Mit Hilfe der Auswerteeinheit 3 kann aus dem Vergleich der gewonnenen Signale die Strömungsgeschwindigkeit des Mediums ermittelt werden, wobei verfälschende Einflüsse kompensiert werden.

## Patentansprüche

1. Durchflußmeßvorrichtung (1) für die Ermittlung der Durchflußgeschwindigkeit eines in einer (10) Rohrleitung (10) strömenden Mediums (8) mit Hilfe von Ultraschallsignalen, **dadurch gekennzeichnet**, daß wenigstens ein elektrischer Schwingkreis (2) vorgesehen ist, der einen Ultraschallsender (4) und einen Ultraschallempfänger (5) für ein Ultraschallsignal aufweist, die über eine akustische Übertragungsstrecke (8) miteinander verbunden sind.

2. Durchflußmeßvorrichtung nach Anspruch 1, dadurch gekennzeichnet, daß das strömende Medium (8) die akustische Übertragungsstrecke bildet.

3. Durchflußmeßvorrichtung nach einem der Ansprüche 1 oder 2, dadurch gekennzeichnet, daß ein Zusatzschwingkreis (20) mit einem integrierten Ultraschallempfänger (50) vorgesehen ist, der zur Kompensation von die Durchflußmessung verfälschenden Störfaktoren dient.

4. Durchflußmeßvorrichtung nach 1 bis 3, dadurch gekennzeichnet, daß der erste Schwingkreis (2) und der Zusatzschwingkreis (20) einen gemeinsamen Ultraschallsender (4) aufweisen, und daß der Ultraschallempfänger (50) des Zusatzschwingkreises (20) mit dem Ultraschallsender (4) über das als akustische Übertragungsstrecke dienende Medium (8) gekoppelt ist.

5. Durchflußmeßvorrichtung nach einem der Ansprüche 1 bis 4, dadurch gekennzeichnet, daß der Ultraschallempfänger (50) des Zusatzschwingkreises (20) gegenüber dem Sender (4) angeordnet ist, und daß die Schallstrecke (8) senkrecht zur Bewegungsrichtung des Mediums angeordnet ist.

6. Durchflußmeßvorrichtung nach einem der Ansprüche 1 oder 5, dadurch gekennzeichnet, daß der Ultraschallsender (4) in eine Begrenzungswand (10A) der Rohrleitung (10) und der Ultraschallempfänger (5) des Schwingkreises (2) in die gegenüberliegende Begrenzungswand (10B) der Rohrleitung (10) integriert ist, und daß der Ultraschallempfänger (5) gegenüber dem Ultraschallsender (4) um einen definierten Winkel α in Strömungsrichtung des Mediums gesehen versetzt angeordnet ist.

7. Durchflußmeßvorrichtung nach einem der Ansprüche 1 bis 6, dadurch gekennzeichnet, daß in die Schwingkreise (2) und (20) je ein Richtungskoppler (70, 80) zur Auskopplung von Teilen der empfangenen Signale integriert ist, und daß die Ausgangssignale der Richtungskoppler (70) und (80) der Auswerteeinheit (3) zuführbar sind.
